# EUROPÄISCHE PATENTSCHRIFT

(11) **EP 0 313 921 B1**
(45) Veröffentlichungstag und Bekanntmachung des Hinweises auf die Patenterteilung: **10.03.1993**
(21) Anmeldenummer: 88116973.4
(22) Anmeldetag: 13.10.1988
(51) Int. Cl.: A23F 5/20, A23F 5/22

(54) **Verfahren zum schonenden Entkoffeinieren von Rohkaffee**
Process for careful decaffeination of green coffee
Procédé de décaféination ménagée de café vert

(30) Priorität: 27.10.1987 DE 3736322
(43) Veröffentlichungstag der Anmeldung: 03.05.1989
(73) Patentinhaber: Jacobs Suchard AG, CH-8008 Zürich (CH)
(72) Erfinder: Schweinfurth, Hermann, Dr.-Ing., D-2800 Bremen 1 (DE)
(74) Vertreter: Bolte, Erich, Dipl.-Ing.

(56) Entgegenhaltungen:
- EP-A- 0 008 398
- CH-A- 239 206
- DE-A- 1 492 736
- DE-A- 2 450 978
- FR-A- 779 451
- FR-E- 12 612
- R. CLARKE et al.: "Coffee", Band 2 "Technology", 1987, Seiten 64-68, Elsevier Applied Science, London, GB

## Beschreibung

Die Erfindung betrifft ein Verfahren zum schonenden Entkoffeinieren von Rohkaffee sowie eine Vorrichtung zum Durchführen dieses Verfahrens.

Beim Entkoffeinieren von Rohkaffee werden die Kaffeebohnen mit einer wässrigen Lösung in Kontakt gebracht, wobei ein Quellen der Kaffeebohnen erfolgt und das Koffein aus den Bohnen herausgelöst wird. Anschließend werden die Kaffeebohnen auf ihren ursprünglichen Feuchtegehalt getrocknet und das Koffein aus der Lösung an vorbehandelter Aktivkohle adsorbiert. In Abhängigkeit vom angewandten Verfahren können dabei auch andere Kaffeeinhaltsstoffe des Rohkaffees mit herausgelöst werden bzw. chemische Veränderungen von Kaffeeinhaltsstoffen auftreten.

In der EP-A-0 008 398 ist ein derartiges Verfahren mit unterschiedlichen wässrigen Extraktionslösungen beschrieben. Als Prozeßflüssigkeit für das Extrahieren des grünen Kaffees kann dabei eine koffeinfreie Kaffee-Extraktlösung eingesetzt werden, deren Konzentration an Kaffeeinhaltsstoffen so hoch ist, daß aus den Kaffeebohnen nichts herausgelöst wird außer Koffein. Die Konzentrationen an Kaffeeinhaltsstoffen in der Lösung und in den Kaffeebohnen stehen dabei im Gleichgewicht (Gleichgewichtslösung). Dieses Gleichgewicht bleibt auch erhalten, wenn Koffein aus der vom Rohkaffee abgetrennten Kaffee-Extraktlösung mittels vorbehandelter Aktivkohle adsorbiert wird. Der so behandelte Rohkaffee wird anschließend getrocknet. Um bei diesem Verfahren chemische Veränderungen der Kaffeeinhaltsstoffe infolge Oxidation beispielsweise von Chlorogensäure und anderen phenolischen Verbindungen zu vermeiden, die sowohl in den Kaffeebohnen selbst als auch in der Kaffee-Extraktlösung auftreten können, erfolgt das Entkoffeinieren der zur Behandlung des Rohkaffees eingesetzten Kaffee-Extraktlösung mittels zusätzlich mit Säure vorbehandelter Aktivkohle.

Der vorliegenden Erfindung liegt die Aufgabe zugrunde, ein Verfahren zum schonenden Entkoffeinieren von Rohkaffee bereitzustellen, bei dem Rohkaffeebohnen keine nachteiligen Veränderungen hinsichtliche Farbe und Aroma erfahren.

Zur Lösung dieser Aufgabe ist das erfindungsgemäße Verfahren gekennzeichnet im wesentlichen durch die Verfahrensschritte Vorquellen des Rohkaffees mit zugeführter Quellflüssigkeit; Extrahieren des Koffeins mit einer wässrigen Lösung; Adsorbtion des Koffeins an einem vorbehandelten Adsorbtionsmittel; Trocknen der entkoffeinierten Bohnen auf den ursprünglichen Feuchtegehalt, wobei mindestens einer der Verfahrensschritte unter Ausschluß von Sauerstoff, insbesondere in Inertgasatmosphäre, durchgeführt wird.

Die durch die Erfindung erreichten Vorteile bestehen im wesentlichen darin, daß die Rohkaffeebohnen durch den Entkoffeinierungsprozeß in ihrem Aussehen und Aroma keine nachteiligen Veränderungen erfahren.

Die Durchführung eines bzw. mehrerer Verfahrensschritte des Entkoffeinierungsprozesses unter Sauerstoffausschluß bzw. in Inertgas-Atmosphäre verhindert weitgehend eine Oxidation der Kaffeeinhaltsstoffe und führt überraschenderweise im wesentlichen zum Erhalt des ursprünglichen Aussehens und Aromas der Rohkaffeebohnen.

Als Inertgase können Edelgase, Stickstoff und Kohlendioxid eingesetzt werden. Kohlendioxid wird vorzugsweise benutzt, da es - im Gegensatz zu Stickstoff - schwerer als Luft ist. Diese Eigenschaft bietet verfahrenstechnische Vorteile.

Die erfindungsgemäße Vorrichtung zum schonenden Entkoffeinieren von Rohkaffee gemäß dem vorgenannten Verfahren besteht aus verschiedenen miteinander in Verbindung stehenden Behältern und ist dadurch gekennzeichnet, daß mindestens die Behälter, in denen Verfahrensschritte unter Sauerstoffausschluß durchgeführt werden, gasdicht verschließbar sind und außer den Zu- und Ableitungen für die wässrigen Lösungen bzw. das Schüttgut Anschlüsse für das Ein- bzw. Durchleiten von Inertgas aufweisen und daß mindestens der Behälter zur Durchführung des Vorquellens des Rohkaffees mit zugeführter Quellflüssigkeit konisch ausgebildet ist.

Aus der DE-A-2 450 978 ist eine Vorrichtung zum Durchführen eines Entkoffeinierungs-Verfahrens bekannt. Diese Vorrichtung besteht aus einem gasdicht verschließbaren Behälter zylindrischen Querschnitts, der entsprechende Zu- und Ableitungen aufweist.

Diese Vorrichtung ist zur Durchführung des erfindungsgemäßen Entkoffeinierungs-Verfahrens ungeeignet, weil insbesondere die während des ersten Verfahrensschritts auftretende Volumenvergrößerung des Rohkaffees in einem Behälter mit zylindrischem Querschnitt zu den Verfahrensablauf negativ beeinflussenden Verblockungen des Rohkaffees führen kann.

Bei der erfindungsgemäßen Vorrichtung sind deshalb die Behälterwände winklig zueinander angeordnet, wobei ein sich in vertikaler Richtung vom Boden aus konisch erweiternder Behälterraum gebildet wird.

Nach einem weiteren Merkmal der Erfindung können die Behälter als Segmente eines Karussell-Extrakteurs ausgebildet sein.

Nachstehend werden Einzelheiten des erfindungsgemäßen Verfahrens beispielsweise näher erläutert:

### Beispiel 1:

In einem konischen Glaskolben wurden ca. 110 g Columbia-Rohkaffeebohnen gegeben. Der Sumpf des Glaskolbens war über eine Schlauchpumpe mit einer Glaskolonne verbunden, in welcher sich ca. 21 g Aktivkohle (bereits feucht) befanden. Vom Sumpf der Aktivkohlenkolonne bestand wiederum eine luftdichte Schlauchverbindung zum Kopf des konischen Glaskolbens.

Die Apparatur wurde nun mit CO₂ geflutet und damit die Luft im System verdrängt. Anschließend wurden ca. 300 g Gleichgewichtslosung zugegeben und umgepumpt. Das Umpumpen wurde nach 6 h beendet und der nun entkoffeinierte Rohkaffee auf seinen ursprünglichen Feuchtegehalt in einem Wirbelschichttrockner bei 60°C innerhalb 2 h getrocknet.

Die erhaltenen entkoffeinierten Rohkaffeebohnen entsprechen in Farbe und Aroma weitgehend ihrem ursprünglichen Zustand.

Die Durchführung des in Beispiel 1 beschriebenen Verfahrens ohne Flutung mit Kohlendioxid führt zu entkoffeinierten Rohkaffeebohnen, die im Vergleich zu den im Verfahren nach Beispiel 1 gewonnenen eine wesentlich dunklere Färbung aufweisen.

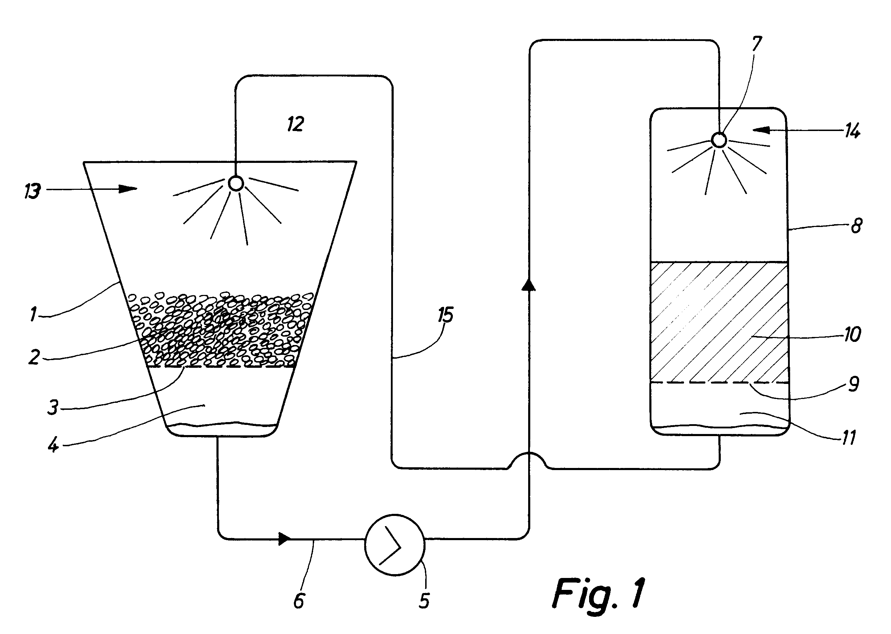

- Fig. 1: zeigt eine Vorrichtung zur Durchführung der Verfahrensschritte a) bis c) in schematischer Darstellung:
In einem konischen Behälter 1 sind die Rohkaffeebohnen 2 auf einem siebartig ausgebildeten Zwischenboden 3 aufgeschüttet. Der untere Teil des Behälters 1, der von Seitenwänden, Boden und siebartigem Zwischenboden 3 gebildet wird, dient als Auffangkammer 4 für Extraktlösung. Der Behälter 1 kommuniziert an seinem Boden mit einer Pumpe 5, deren Druckanschluß über eine Leitung 6 zu einem Sprühkopf 7 geführt ist, der im oberen Teil eines zylindrischen Behälters 8 sitzt. Der Behälter 8 weist einen siebartig ausgebildeten Zwischenboden 9 auf, über dem Aktivkohle 10 als Adsorptionsmittel geschichtet ist. Im unteren Bereich des Behälters 8, zwischen siebartigem Zwischenboden und Boden befindet sich eine Auffangkammer 11 für entkoffeinierte Extraktlösung. Vom Boden dieses Behälters 8 führt eine Leitung zum Sprühkopf 12 im oberen Teil des Behälters 1. Jeweils im oberen Bereich der Behälter 1 und 8 sind Einlaßventile zum Einleiten von Inertgas angebracht.

Vor Inbetriebnahme der Vorrichtung wird mit Kohlendioxid geflutet und so die Luft verdrängt. Bei Betrieb der beschriebenen VOrrichtung wird z. B. koffeinfreie Kaffee-Extraktlösung durch den Sprühkopf 12 auf die Rohkaffeebohnen geleitet; die Extraktlösung rieselt durch die Kaffeebohnen-Schicht. Dabei quellen die Bohnen infolge von Wasseraufnahme auf und Koffein wird durch die wäßrige Lösung aus den Bohnen herausgelöst. Der koffeinhaltige Extrakt passiert den siebartigen Zwischenboden 3 und gelangt in de Aufnahmekammer 4, von wo er über die Leitung 6 in den zylindrischen Behälter 8 gepumpt wird. Durch den Sprühkopf 7 regnet der Extrakt auf die vorher befeuchtete Aktivkohle 10. Beim Passieren der Aktivkohle wird Koffein aus dem Extrakt adsorbiert. Der resultierende koffeinfreie Extrakt läuft durch den Siebboden 9 und gelangt in die Auffangkammer 11. Von dort wird er zur weiteren Extraktion der Rohkaffeebohnen durch die Leitung 15 zum Sprühkopf 12 transportiert. Die Extraktlösung wird so lange umgepumpt, bis der gewünschte Entkoffeinierungsgrad erreicht ist.

Für den ersten Verfahrensschritt hat sich die Verwendung eines konischen Behälters als besonders vorteilhaft erwiesen. Rohkaffeebohnen weisen bei ihrer Auslieferung üblicherweise einen Wassergehalt von 7 bis 15 % auf. Beim Inkontaktbringen mit einer wäßrigen Lösung nehmen sie Wasser auf, wobei sich das Volumen der Bohnen etwa verdoppelt. Um eine Verblockung der Kolonnenapparatur, die zum Behandeln der Rohkaffeebohnen üblicherweise verwendet wird, zu vermeiden, ist es vorteilhaft, mindestens im ersten Verfahrensschritt einen konisch ausgebildeten Behälter einzusetzen.

Vorzugsweise ist dieser Behälter als sektorförmige Zelle eines Karussellextrakteurs ausgebildet. Bevorzugt kann der konische Behälter im ersten Verfahrensschritt eine sektorförmige Zelle eines Karussellextrakteurs sein, wobei der Karussellextrakteur eine Vielzahl gleichartiger Zellen und einen feststehenden Schlitzbogen aufweist. Bei einem derartigen Behälter stehen zwei Zellenwänden winklig zueinander und bilden einen sich in vertikaler Richtung konisch erweiternden Behälterraum. Ein Karussellextrakteur umfaßt mehrere Zellen, die durch, von einer gemeinsamen Achse radial sich erstreckende Zellwände über einem feststehendem Schlitzboden gebildet werden. Bei einem Karussellextrakteur werden die einzelnen Zellen mit ihrem Inhalt über einen feststehenden Schlitzbogen gedreht, der mit einem sektorförmigen Abschnitt unterbrochen ist, so daß der Zelleninhalt in diesem Abschnitt nach unten durchfallen und abgeführt werden kann.

Der ersten Behandlungsstufe, in welcher der Rohkaffee vorgequollen wird, folgt die eigentliche Extraktionsstufe, die sich über mehrere Extraktionszellen hinzieht. Hierbei ist jeder Zelle eine separate Auffangkammer zugeordnet. Der so ausgebildete Karussellextrakteur arbeitet vorzugsweise als kontinuierlicher Perkulationsapparat nach dem Kreuz-/Gegenstromverfahren. In den einzelnen Extraktionsstufen steigt somit (entgegen der Kaffee-Transportrichtung gesehen) die Extrakt-Konzentration, wobei die Vorquell-Stufe gleichzeitig eine erste Extraktionsstufe mit maximaler Extraktkonzentration darstellt und die Extraktionsflüssigkeit aus dieser ersten Stufe zum Adsorber geführt wird. Bevorzugt ist der Adsorber ebenfalls als Karussellextrakteur ausgebildet, der nicht nur die Adsorptionsstufen enthält, sondern in dem das Adsorptionsmittel vor den Adsorptionsstufen vorbeladen und nach den Adsorptionsstufen gewaschen wird. Durch diese Ausbildung ist es besonders einfach, die Extraktionsvorrichtung mit der Adsorptionsvorrichtung zu synchronisieren.

Das Vorquellen von Rohkaffeebohnen kann auch in zylindrischen Behältern erfolgen. Allerdings muß dann die Schüttung während des Quellvorganges durch spezielle Maßnahmen in Bewegung gehalten werden. Bei diesem Bewegen der Bohnen lösen sich jedoch feine Partikel von der Oberfläche der Bohnen (Silberhäutchen), die mit der Flüssigkeit mitgeschwämmt und zu einer Verstopfung im nachfolgenden Aktivkohle-Adsorber führen.

## Patentansprüche

1. Verfahren zum schonenden Entkoffeinieren von Rohkaffee, **gekennzeichnet** im wesentlichen durch die Verfahrensschritte
a) Vorquellen des Rohkaffees mit zugeführter Quellflüssigkeit;
b) Extrahieren des Koffeins mit einer wäßrigen Lösung;
c) Adsorption des Koffeins an einem vorbehandelten Adsorptionsmittel;
d) Trocknen der entkoffeinierten Bohnen auf den ursprünglichen Feuchtigkeitsgehalt,
wobei mindestens einer der Verfahrensschritte unter Ausschluß von Sauerstoff, insbesondere in Inertgasatmosphäre, durchgeführt wird.

2. Verfahren nach Anspruch 1,
**dadurch gekennzeichnet,** daß sämtliche Verfahrensschritte in Inertgasatmosphäre durchgeführt werden.

3. Verfahren nach Anspruch 1,
**dadurch gekennzeichnet,** daß die Verfahrensschritte a) bis c) in Inertgasatmosphäre durchgeführt werden.

4. Verfahren nach einem oder mehreren der Ansprüche 1 bis 3,
**dadurch gekennzeichnet,** daß als Inertgas Kohlendioxid, Stickstoff oder ein Edelgas verwendet wird.

5. Vorrichtung, zum Durchführen des Verfahrens nach einem oder mehreren der Ansprüche 1 bis 4, bestehend aus verschiedenen miteinander in Verbindung stehenden Behältern, **dadurch gekennzeichnet,** daß mindestens die Behälter, in denen Verfahrensschritte unter Sauerstoff-Ausschluß durchgeführt werden, gasdicht verschließbar sind und außer den Zu- und Ableitungen für die wäßrigen Lösungen bzw. das Schüttgut Anschlüsse für das Ein- bzw. Durchleiten von Inertgas aufweisen und daß mindestens der Behälter zur Durchführung des Verfahrensschrittes a) konisch ausgebildet ist.

6. Vorrichtung nach Anspruch 5,
**dadurch gekennzeichnet,** daß die Behälter als Segmente eines Karussell-Extrakteurs ausgebildet sind.

## Claims

1. Process for mild decaffeination of raw coffee, characterised essentially by the following process steps:
a) Preswelling of the raw coffee by means of added swelling fluid;
b) extraction of the caffeine by means of an aqueous solution;
c) adsorption of the caffeine on a pretreated adsorbent; and
d) drying of the decaffeinated beans to the original moisture content,
at least one of the process steps being carried out with exclusion of oxygen, especially in an inert gas atmosphere.

2. Process according to Claim 1, characterised in that all the process steps are carried out in inert gas atmosphere.

3. Process according to Claim 1, characterised in that the process steps a) to c) are carried out in an inert gas atmosphere.

4. Process according to one or more of Claims 1 to 3, characterised in that carbon dioxide, nitrogen or a rare gas is used as the inert gas.

5. Equipment for carrying out the process according to one or more of Claims 1 to 4, consisting of various, mutually communicating containers, characterised in that at least the containers, in which process steps are carried out with exclusion of oxygen, can be sealed gas-tight and, in addition to the inlet and outlet lines for the aqueous solutions and the loose material, have connections for passing inert gas in or through and in that at least the container for carrying out process step a) is of conical shape.

6. Equipment according to Claim 5, characterised in that the containers are shaped as segments of a rotary extractor.

## Revendications

1. Procédé de décaféination ménagée de café vert, caractérisé essentiellement par les étapes
a) de prégonflement du café vert avec un liquide de gonflement amené,
b) d'extraction de la caféine par une solution aqueuse,
c) d'adsorption de la caféine sur un agent d'adsorption prétraité,
d) de séchage des grains décaféinés au taux d'humidité initial,
dans lequel au moins une des étapes du procédé est effectuée en l'absence d'oxygène, en particulier dans une atmosphère de gaz inerte.

2. Procédé suivant la revendication 1, caractérisé en ce que toutes les étapes du procédé sont effectuées dans une atmosphère de gaz inerte.

3. Procédé suivant la revendication 1, caractérisé en ce que les étapes a) à c) du procédé sont effectuées dans une atmosphère de gaz inerte.

4. Procédé suivant une ou plusieurs des revendications 1 à 3, caractérisé en ce que, comme gaz inerte, on utilise du dioxyde de carbone, de l'azote ou un gaz noble.

5. Dispositif pour la mise en oeuvre du procédé suivant une ou plusieurs des revendications 1 à 4, comprenant différents récipients qui sont mutuellement en communication, caractérisé en ce qu'au moins les récipients, dans lesquels des étapes du procédé sont effectuées en l'absence d'oxygène, peuvent être fermés d'une manière étanche aux gaz et présentent, en plus des conduits d'amenée et de sortie pour les solutions aqueuses et respectivement la matière en vrac, des raccords pour l'introduction et respectivement le passage de gaz inerte, et en ce qu'au moins le récipient destiné à la mise en oeuvre de l'étape a) du procédé est réalisé sous une forme conique.

6. Dispositif suivant la revendication 5, caractérisé en ce que les récipients sont réalisés sous la forme de segments d'un extracteur en carrousel.
